# DEMANDE DE BREVET EUROPEEN

(11) **EP 4 521 753 A1**
(43) Date de publication de la demande: **12.03.2025**
(21) Numéro de dépôt: 24197883.2
(22) Date de dépôt: 02.09.2024
(51) Int. Cl.: H04N 21/2343, H04N 21/436, H04N 21/845

(54) **PROCÉDÉ DE GESTION DU TRAITEMENT D'UN FLUX VIDÉO DANS UN RÉSEAU LOCAL**

(30) Priorité: 07.09.2023 FR 2309428
(71) Demandeur: Orange, 92130 Issy-les-Moulineaux (FR)
(72) Inventeur: MARCHAND, Hervé, 92326 Chatillon (FR); RIVOALEN, Mathieu, 92326 Chatillon (FR)

(57) **Abrégé**

L'invention concerne un procédé de gestion du traitement d'un flux de données par une entité de traitement (nCDN(tk)) dans un réseau local comprenant un ensemble de dispositifs de traitement de données (STB,PC,MOB), caractérisé en ce que la localisation de l'entité de traitement évolue dans le temps dans l'ensemble.

## Description

### Domaine technique

Le domaine de l'invention est celui des contenus multimédias numériques, à savoir les contenus audio et/ou vidéo numériques, également appelés contenus audiovisuels.

L'invention se rapporte à un procédé de gestion du traitement d'un flux vidéo dans un réseau local comprenant une passerelle et au moins un dispositif de traitement de données.

L'entité de traitement est apte à recevoir un flux de données, à traiter les données et à transmettre les données traitées. Dans l'exemple qui servira à illustrer l'invention dans la suite, l'entité de traitement est installée sur un dispositif capable et est capable de recevoir des paquets de données depuis un premier réseau, de traiter les données de manière à obtenir des segments de contenus et à transmettre sur demande les segments obtenus à destination d'un dispositif de lecture. Une telle entité est par exemple une entité capable de fournir des segments en mode « adaptative streaming » sans se limiter à ce dernier.

Le dispositif de traitement de données vise par exemple un dispositif de lecture vise apte à recevoir des flux multimédias sous forme de segments et à lire les contenus reçus ; un tel dispositif de traitement de données est par exemple un décodeur, un téléphone mobile, une tablette, etc.

Le lien de communication entre le dispositif de lecture et un dispositif fournissant des segments est quelconque. Dans l'exemple décrit ci-dessous, ce lien sera un lien unicast.

Un contenu est par exemple un contenu diffusé en temps réel appelé aussi contenu « live » par l'homme du métier, un contenu de télévision à la demande, un contenu de vidéo à la demande, etc.

### Etat de la technique

Il existe aujourd'hui plusieurs modes de transmission de contenu depuis un émetteur de contenus vers un dispositif de lecture de contenu. Un mode connu est par exemple le mode Multicast ABR (M-ABR).

Ce mode M-ABR met en oeuvre un transport de paquets IP en mode Multicast. Dans ce mode, plusieurs canaux de transmission multicast sont créés pour une seule chaine TV afin de coder et diffuser plusieurs flux avec différentes qualités sur chaque canal multicast, respectivement. En d'autres mots, les canaux diffusent un même contenu avec différentes qualités d'images, respectivement.

Une adresse IP est attribuée à chaque canal, de cette façon un accès au contenu dans une qualité donnée s'effectue en se connectant à l'adresse IP correspondante.

Le mode multicast M-ABR est mis en oeuvre par une entité de traitement nCDN. Cette entité est installée dans une passerelle domestique qui interface un réseau WAN et un réseau local. Cette entité de traitement joue le rôle de point de terminaison du flux Multicast. Dans les faits, cette entité de traitement reçoit un flux de données audio et/ou vidéo transmis depuis un serveur en mode multicast (par exemple avec la technologie « IPTV » (sigle de « Internet Protocol Télévision » en anglais) via un canal ; l'entité de traitement mémorise ensuite les paquets reçus, segmente les paquets reçus conformément à la nome HAS et transmet en unicast les segments les uns après les autres à destination d'un dispositif de lecture apte à lire des segments.

Comme l'entité de traitement est installée dans la passerelle domestique, la qualité de traitement dépend donc des capacités de traitement de la passerelle. Il est important que les capacités de traitement de la passerelle soient optimales pour traiter au mieux le flux de données et assurer une qualité de service optimale.

Or, ce n'est pas toujours le cas pour de multiples raisons. Par exemple, au moment du traitement, la passerelle peut traiter d'autres données et peut donc voir ses capacités de traitement diminuées ; aussi, la passerelle peut être nativement peu performante en termes de capacité de traitement pour des raisons de coûts financiers. Lorsque la passerelle domestique voit sa capacité de traitement diminuée, on constate des gels d'images. La restitution du contenu n'est donc pas optimale, et l'expérience utilisateur est très mauvaise.

Aussi, lorsque la passerelle domestique est indisponible, l'accès au flux de données n'est plus possible.

### L'invention vient améliorer la situation

### L'invention

A cet effet, l'invention se rapporte à un procédé de gestion du traitement d'un flux de données par une entité de gestion dans un réseau local comprenant un ensemble de dispositifs de traitement de données, caractérisé en ce que la localisation de l'entité de traitement évolue dans le temps dans l'ensemble.

Selon l'invention, la localisation de l'entité change au fil du temps. Plus précisément, le procédé comprend une réception d'un flux de données et une sélection d'un lieu de traitement et un traitement du flux de données dans le dispositif sélectionné. L'ordre d'exécution des étapes qui précède est indifférent.

L'invention évite d'utiliser un dispositif par défaut pour le traitement d'un flux de données, en l'espèce une passerelle domestique. La possibilité de choisir à souhait un dispositif dans un ensemble de dispositif permet entre autres d'éviter une situation de blocage lié à l'indisponibilité du dispositif incluant l'entité de traitement par exemple parce que le dispositif concerné est hors tension. Aussi, en réalisant le traitement du flux de données par un dispositif choisi judicieusement, par exemple le dispositif ayant des capacités de traitement optimales pour le traitement visé, le traitement résultant sera forcément de meilleure qualité. Les risques de gel d'images sont alors largement réduits voire inexistants.

Selon un premier mode de réalisation, le dispositif de traitement de données est choisi en fonction des capacités de traitement du dispositif de traitement. Comme indiqué ci-dessus, un dispositif de traitement de données choisi judicieusement, ici en fonction de ses capacités, sous-entendu des capacités de ses ressources physiques et/ou logicielles, permettra de réaliser un meilleur traitement et donc d'assurer une restitution du contenu sans gels d'images.

Selon un deuxième mode de réalisation, qui pourra être mis en oeuvre alternativement ou cumulativement avec le précédent mode, le choix s'effectue en comparant des capacités de traitement de dispositifs du réseau local et en sélectionnant un dispositif à la base de la comparaison.

Selon un troisième mode de réalisation, qui pourra être mis en oeuvre alternativement ou cumulativement avec les précédents modes, les capacités de traitement incluent une taille de mémoire volatile. Ce mode permet de sélectionner un dispositif équipé d'une mémoire volatile adaptée au flux de données. Par exemple, si le flux de données est un flux vidéo de type 4K, la mémoire volatile sera sélectionnée parmi les mémoires volatiles des différents dispositifs de manière à traiter ce flux correctement.

Dans un autre mode de réalisation, qui pourra être mis en oeuvre alternativement ou cumulativement avec les précédents modes, l'entité de traitement est apte à traiter un flux de données associé à un débit d'encodage ; dans cette configuration, le choix du lieu d'installation de l'entité dépend en outre dudit débit d'encodage du flux à traiter. En effet, certains flux voient leurs débits d'encodage variés dans le temps du fait de la variation de la bande passante sur le réseau ; dans ce cas, il est judicieux de prendre en compte ce débit d'encodage lors du choix de la mémoire volatile à utiliser sous-entendu du dispositif incluant cette mémoire volatile.

Selon un quatrième mode de réalisation, qui pourra être mis en oeuvre alternativement ou cumulativement avec les précédents modes, le réseau local comprenant une passerelle domestique, la passerelle route le flux de données vers le dispositif de traitement choisi. Dans ce mode, la passerelle mémorise l'adresse du dispositif sélectionné sur lequel le traitement va avoir lieu ; de cette façon, dès réception d'un flux multimédia, la passerelle route le flux vers le dispositif sélectionné pour être traité par l'entité de traitement. Si ce dernier n'est pas disponible, la passerelle peut décider de traiter le flux de données reçu.

Selon un cinquième mode de réalisation, qui pourra être mis en oeuvre alternativement ou cumulativement avec les précédents modes, le dispositif de traitement de données est apte à recevoir le flux de données depuis un réseau de communication. Ce mode permet de sélectionner un dispositif de traitement données capable de recevoir le flux de données depuis le réseau de communication sans faire intervenir la passerelle domestique. L'avantage est que si la passerelle est indisponible, le dispositif ainsi sélectionné peut accéder au flux en lieu et place de la passerelle.

L'invention permet de modifier le lieu du traitement du flux de données dans le temps. Cela permet d'utiliser le dispositif le plus adapté en particulier lorsque le dispositif choisi voit ses capacités diminuer. Le changement de dispositif pour le traitement peut aussi se baser sur des prévisions de charge sur les dispositifs du réseau local.

Selon un aspect matériel, l'invention se rapporte à une entité de gestion d'un flux de données dans un réseau local comprenant un ensemble de dispositifs de traitement de données, caractérisé en ce qu'il comprend un module apte à requérir une modification du lieu de traitement dans ledit ensemble.

Selon un autre aspect matériel, l'invention se rapporte à un décodeur comprenant une entité de gestion telle que définie ci-dessus.

Selon un autre aspect matériel, l'invention se rapporte à un programme d'ordinateur apte à être mis en oeuvre sur une entité telle que définie ci-dessus, le programme comprenant des instructions de code qui, lorsqu'il est exécuté par un processeur, réalise les étapes du procédé de sélection définies ci-dessus.

Enfin, selon un autre aspect matériel, l'invention se rapporte à un support de données sur lequel a été mémorisée au moins une série d'instructions de code de programme pour l'exécution d'un procédé de gestion tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle d'un dispositif de lecture.
[Fig. 3] La figure 3 un schéma synoptique simplifié de la structure matérielle d'une passerelle domestique.
[Fig. 4] La figure 4 illustre schématiquement un contenu découpé en segments de plusieurs qualités.
[Fig. 5] La figure 5 illustre un mode de réalisation sous forme de messages échangés entre les différents dispositifs impliqués dans le procédé de gestion.

### Description détaillée d'un exemple de réalisation illustrant l'invention :

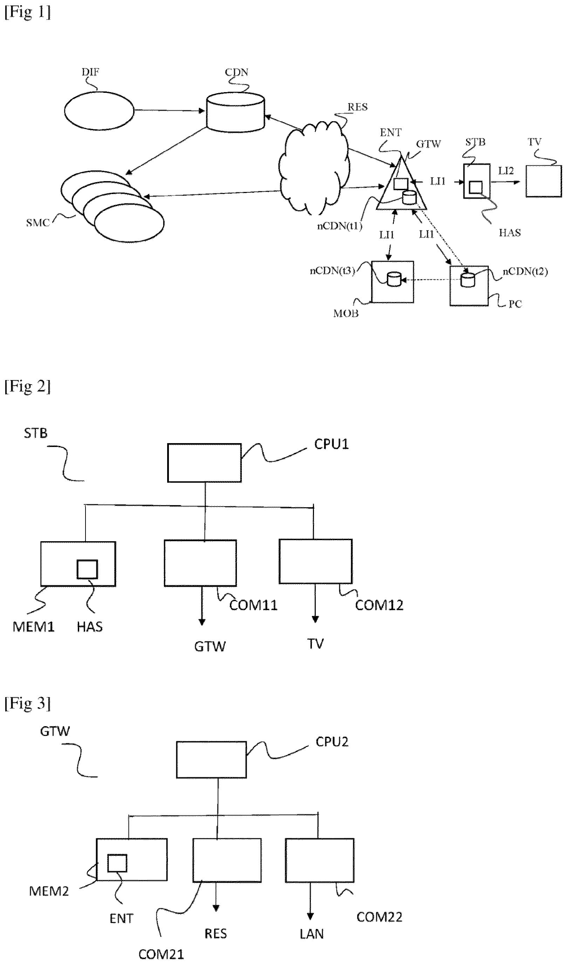

On présente désormais, en relation avec la figure 1, un système informatique SYS incluant une passerelle domestique GTW offrant un réseau local dans lequel se trouve des dispositifs de traitement de données à savoir un dispositif de lecture STB, par exemple un décodeur, un ordinateur PC, une tablette TAB.

Le système SYS comprend aussi une entité de traitement de flux de données référencée nCDN(tk), tk étant une donnée temporelle désignant un instant donné (k est un entier dans notre exemple), par exemple un jour donné, à une heure donné ; Par exemple t1 correspond au 5 juin 2023 à 15h10, t2 au 12 juin 2023 à 16h20, etc.

On verra dans la suite que la localisation de l'entité varie en fonction du temps et celle-ci se trouve en un lieu donné à un instant t1, en un autre lieu à t2 et encore en un autre lieu à un autre instant t3 ; d'où les références nCDN(t1) à nCDN(t3) sur la figure 1.

Dans notre exemple, l'entité de traitement nCDN(tk) est apte à transmettre sur demande des segments de contenu à destination du dispositif de lecture STB.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type WiFi pour une communication locale sans fils avec la passerelle résidentielle GTW. Le module en question est référencé CMO11 sur la figure 2.

Le dispositif de lecture STB comprend une entité de téléchargement en mode streaming HAS apte à gérer le téléchargement de segments.

Le dispositif de lecture STB comprend un module de téléchargement HAS. Ce module est apte à entrer en communication avec une entité de traitement de flux de données nCDN(tk) compatible.

La figure 3 représente une architecture d'une passerelle domestique GTW. Ce dispositif GTW comprend, classiquement, des mémoires MEM2 associées à un processeur CPU2. Les mémoires peuvent être de type ROM (de l'anglais « Read Only Memory ») ou RAM (de l'anglais « Random Access Memory ») ou encore Flash.

La passerelle peut communiquer avec des dispositifs du réseau local via un module de communication COM21. Ce module COM21 est par exemple une interface Wi-Fi, une liaison Ethernet, ou tout autres moyens de communication.

La passerelle peut communiquer avec des dispositifs distants via un module de communication COM22 ; dans notre exemple le module est un module de communication WAN.

Dans notre exemple, la passerelle stocke une entité de gestion ENT apte à, selon l'invention, gérer la localisation de l'entité de traitement des flux de données reçues par la passerelle depuis le réseau WAN.

Comme indiqué précédemment, le système comprend une entité de traitement de flux de données nCDN(tk) aptes à créer des segments, dans notre exemple, les segments créés par l'entité de traitement nCDN(tk) sont compatibles avec le module de téléchargement HAS.

L'entité de traitement nCDN(tk) dispose de plusieurs sources multicast SMC pour récupérer un contenu.

Pour sélectionner une des sources de données multicast SMC, le dispositif de lecture STB, sous-entendu le module HAS présent sur le dispositif de lecture STB, émet une requête de demande d'accès au contenu et indique une qualité souhaitée pour la restitution souvent exprimée en kbits/sec par l'homme du métier. Suite à la réception, l'entité nCDN(tk) s'adresse (ou s'abonne) à un serveur multicast SMC (parmi plusieurs serveurs multicasts) disposant du contenu dans la qualité souhaitée et reçoit en retour le contenu depuis le serveur multicast en question via le réseau de télécommunication, le réseau Internet dans notre exemple ; le mode de transmission mis en oeuvre entre le serveur multicast et l'entité de traitement est par exemple le mode IPTV (sigle de « Internet Protocol Télévision »), connu de l'homme du métier. L'invention ne se limite pas au mode IPTV mais à tout autres de modes de transmission similaire.

Ensuite, après réception du contenu dans une qualité donnée, l'entité nCDN(tk) mémorise les paquets IP reçus dans une mémoire RAM de manière à traiter ces paquets, le traitement consistant dans notre exemple à découper les paquets en segments, et à encoder chaque segment pour obtenir des segments dans la qualité demandée.

Après encodage, l'entité de traitement nCDN transmet en réponse un fichier de description incluant les adresses (URL) des segments ainsi créés.

On verra dans la suite où se situe l'entité de traitement nCDN(t) dans le réseau local conformément à l'invention.

On expliquera brièvement dans la suite en quoi consiste un segment et quelles sont les qualités possibles (exprimée en Kbits/s) pour chaque segment d'un contenu.

Un réseau de communication RES permet une communication entre les sources de contenu, dans notre exemple des serveurs multicasts offrant chacun des qualités respectives pour un même contenu et l'entité nCDN(tk). Dans notre exemple, le réseau RES est le réseau Internet.

Le dispositif de lecture STB est relié via un lien de communication LI1 à la passerelle GTW et via un lien de communication à un dispositif de restitution TV tel qu'un écran de télévision.

Dans notre exemple, la liaison entre le dispositif de lecture STB et l'entité de traitement nCDN(tk) est une liaison point à point (ou unicast).

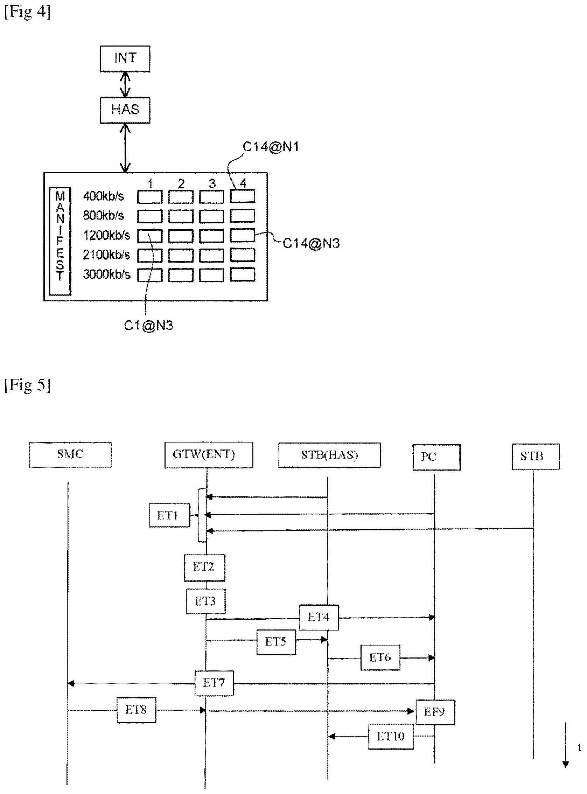

En référence à la figure 4, différentes qualités peuvent être encodées pour le même contenu d'une chaîne, correspondant par exemple à différents débits d'encodage. Plus généralement, on parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels.

La description de ces différentes qualités et de la segmentation temporelle associée, ainsi que les segments de contenu, sont décrits pour le dispositif de lecture STB et mis à sa disposition via leurs adresses Internet (URI : Universal Ressource Identifier). L'ensemble de ces paramètres (qualités, adresses des segments, etc.) est en général regroupé dans un fichier de paramètres appelé fichier de description ou « fichier manifest » par l'homme du métier. On notera que ce fichier de paramètres peut être un fichier informatique ou un ensemble d'informations descriptives du contenu, accessible à une certaine adresse.

Le dispositif de lecture STB, dans un contexte de téléchargement adaptatif progressif, peut adapter les requêtes d'accès qu'il transmet à l'entité nCDN(tk) pour recevoir et décoder le contenu demandé à la qualité qui lui correspond au mieux. Dans notre exemple, si les contenus sont disponibles aux débits 400 kb/s (kilobits par seconde) (Résolution 1, ou niveau 1, noté N1), 800 kb/s (N2), 1200 kb/s (N3) 2100 kb/s (N4) 3000 kb/s (N5) et que le terminal client dispose d'une bande passante de 3000 kb/s, il peut demander le contenu à n'importe quel débit inférieur à cette limite, par exemple 2100 kb/s. De manière générale, on note « Ci@Nj » le contenu numéro i avec la qualité j (par exemple le j-ième niveau Nj de qualité décrit dans le fichier de description).

Dans cet exemple, pour visualiser un contenu, le dispositif de lecture STB, sous-entendu le module de téléchargement HAS, interroge tout d'abord, via la passerelle de service GTW, l'entité de traitement nCDN(tk) pour obtenir une adresse IP du fichier de description du contenu sur le réseau. Dans la suite, on supposera que ce fichier est un fichier de type fichier de description selon la norme MPEG-DASH.

Un fichier de description comprend des informations sur les segments et les débits d'encodage disponibles. Un tel fichier comporte par exemple pour chaque segment plusieurs qualités différentes (N1 = 400 kb/s, N2 = 800 kb/s, N3 = 1200 kb/s, ...) et les adresses d'accès des segments en question. Une fois que le dispositif de lecture STB dispose des adresses de segments correspondant au contenu souhaité, le dispositif de lecture STB télécharge les segments les uns après les autres. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

Ensuite, le décodeur dispositif de lecture STB, sous-entendu le module HAS, reçoit les segments, les décode ensuite, et requiert une restitution sur l'écran du téléviseur TV.

On notera que le contenu est quelconque. Le contenu est par exemple un programme télévisuel diffusé en différé, ou une vidéo à la demande, ou une vidéo personnelle de l'utilisateur, ou tout autre contenu multimédia, pour laquelle l'invention s'applique également.

Le dispositif de lecture STB peut être piloté par l'utilisateur au moyen d'une télécommande. La télécommande peut être physique ou logicielle.

Selon l'invention, une étape préalable est exécutée au cours de laquelle une entité de gestion ENT détermine le lieu du traitement dans le réseau local.

Contrairement à l'état de la technique dans lequel l'entité est stockée dans la passerelle domestique une fois pour toute, dans l'invention, la localisation de l'entité varie dans le temps ; l'entité peut être stockée sur un dispositif du réseau local au choix.

On verra que le dispositif est choisi en fonction des performances des ressources physiques et/logicielles pour la réalisation du traitement de données.

Les étapes d'un mode de réalisation sont décrites ci-dessous en référence à la figure 5. Sur cette figure, sont représentés des axes correspondants 1) aux serveurs multicast SMC, 2) à la passerelle GTW incluant l'entité de gestion ENT, 3) à un ensemble de dispositif de traitement de données à savoir le dispositif de lecture STB incluant le module de téléchargement HAS, l'ordinateur PC et le terminal mobile.

Un axe temporel « t » permet de représenter le sens d'exécution des étapes.

Sur cette figure 5, des liaisons fléchées sont illustrées entre les axes afin d'illustrer des échanges de messages entre les différents dispositifs.

On suppose dans notre exemple que l'entité de traitement nCDN(t1) à l'instant t1 courant est enregistrée dans la mémoire de la passerelle GTW.

Lors d'une étape ET1, l'entité de gestion ENT reçoit des données représentatives de ressources physiques et/ou logicielles de tout ou partie des dispositifs de traitement de données du réseau local LAN y compris de la passerelle GTW elle-même. Cette étape ET1 peut être réalisée soit spontanément de la part des dispositifs de traitement de données soit sur requête de l'entité de gestion ENT.

Lors d'une étape ET2, dans notre exemple, l'entité de gestion ENT s'intéresse à une ressource physique en particulier, à savoir la mémoire volatile de type RAM des différents dispositifs, plus particulièrement à la taille en octets de ces mémoires. L'invention ne se limite pas à cette ressource mais s'étend à d'autres ressources ; par exemple, d'autres ressources peuvent être prises en compte à savoir la puissance du processeur, les liaisons de communication dont dispose les dispositifs de traitement de données par exemple permettant la réception d'un flux de données depuis le réseau RES etc.

Lors d'une étape ET3, l'entité ENT classe les dispositifs de traitement de données STB/PC/MOB, ou une partie d'entre eux, en fonction des tailles des mémoires RAM respectives et retient dans notre exemple le dispositif de traitement ayant la taille en octet de mémoire RAM la plus importante.

On suppose que le dispositif sélectionné est l'ordinateur PC.

Lors d'une étape ET4, à un instant t2, l'entité de gestion ENT requiert le téléchargement de l'entité de traitement nCDN depuis la passerelle GTW à destination du dispositif sélectionné PC. L'entité de traitement est référencée nCDN(t2) sur la figure 5.

Lors d'une étape ET5, l'entité de gestion ENT ayant à disposition l"adresse IP dans le LAN de l'ordinateur PC désigne cette adresse IP et transmet cette adresse IP au client HAS installé dans le dispositif de lecture STB.

Dans notre exemple, l'ordinateur PC disposant d'une connexion Wi-Fi est apte à communiquer directement avec le dispositif de lecture STB.

A noter que dans le cas où le dispositif sélectionné ne peut communiquer directement avec le dispositif de lecture STB, le dispositif sélectionné communique avec le dispositif de lecture STB via la passerelle domestique. GTW.

Dans notre exemple, à ce stade, l'ordinateur PC peut transmettre, après traitement par l'entité de traitement ENT(t2), des segments au dispositif de lecture STB en mode Unicast.

On suppose ensuite que le dispositif de lecture STB transmet une requête d'accès à un contenu. Cette requête est transmise lors d'une étape ET6 à l'ordinateur PC équipé de l'entité de traitement nCDN(t2).

L'entité nCDN(t2), installée sur l'ordinateur PC, requiert ensuite lors d'une étape ET7 un accès au contenu depuis un serveur de multicast SRV choisi dans notre exemple en fonction d'une qualité renseignée dans la requête issue du dispositif de lecture STB. La requête transite dans notre exemple par la passerelle domestique.

La passerelle domestique GTW reçoit en retour, lors d'une étape ET8, un flux de données qu'elle route vers l'ordinateur PC pour que l'agent de traitement nCDN(t2) puisse traiter le flux de données reçu.

L'entité de traitement nCDN(t2) reçoit ensuite des paquets de données IP issus de la passerelle GTW. Après réception, l'entité de traitement nCDN(t2) réalise lors d'une étape ET9 un traitement par la biais de son processeur. Le traitement est connu de l'homme du métier et ne sera pas décrit davantage car sans intérêt pour l'exposé de l'invention. Rappelons simplement que les paquets IP reçus sont découpés en segments de contenu ; les segments sont ensuite transmis lors d'une étape ET10 successivement au dispositif de lecture STB.

A ce stade le dispositif de lecture STB peut recevoir les segments, les décoder et requérir une restitution sur le dispositif de restitution TV.

Les capacités des dispositifs du réseau local variant dans le temps, l'entité de gestion ENT réitère les étapes ET1 à ET3. Une fois le nouveau classement obtenu, l'entité de gestion ENT déplace le lieu de traitement. Par exemple, sur la figure 5, l'entité de traitement est déplacée à un instant t3 vers le terminal mobile MOB. A ce moment-là, les étapes ET4 à ET10 décrite ci-dessus sont réalisées dans le terminal mobile MOB en lieu et place de l'ordinateur PC.

Sur la figure 1, le déplacement du lei de traitement est illustré par le biais d'une flèche courbe discontinue ; une première flèche courbe pour illustrer un premier déplacement de l'entité de traitement (nCDN(t1)->nCDN(t2)) et une deuxième flèche courbe pour illustrer un deuxième déplacement de l'entité de traitement (nCDN(t2)->nCDN(t3)). Ces déplacements du lieu de traitement montrent bien que l'emplacement de l'entité de traitement évolue dans le temps dans l'ensemble afin de traiter au mieux le flux de données reçu du réseau RES.

Le mode de réalisation décrit ci-dessus peut faire l'objet de variantes dont celles décrites ci-dessous.

Selon une variante, la localisation de l'entité de traitement nCDN(tk) peut être déterminée après chaque demande d'accès à un contenu issue du dispositif de lecture STB. La localisation peut donc varier donc au fil du temps très souvent.

On a vu précédemment dans notre exemple de réalisation que les capacités de traitement incluent une taille de mémoire volatile. En complément, selon une variante, l'entité de gestion ENT prend aussi en compte le débit d'encodage associé au flux reçu. En effet, le débit d'encodage variant dans le temps, les besoins en mémoire RAM lors du traitement du flux de données varie également. Le nombre de dispositifs de traitement de données adaptés au traitement peut donc augmenter en fonction du débit d'encodage courant.

On a vu précédemment que la passerelle domestique GTW route le flux de données vers le dispositif de traitement choisi, dans l'exemple l'ordinateur PC. En variante, le dispositif de traitement de données est choisi en fonction de son aptitude à recevoir le flux de données depuis un réseau de communication. Ce mode permet d'accéder au contenu si la passerelle est indisponible ; dans ce cas le dispositif sélectionné accède au flux en lieu et place de la passerelle.

Selon une autre variante, l'entité de traitement nCDN(tk) peut être déplacée dans le réseau local. Lorsque l'entité de gestion ENT désigne un dispositif pour le traitement, l'entité de traitement nCDN(tk) est transmise vers le dispositif désigné par exemple depuis la passerelle domestique GTW.

Selon une autre variante, des entités de traitement nCDN(tk) sont stockées sur les dispositifs de traitement de données du réseau local et peuvent être activés sur demande. Cette variante évite une étape de transmission de l'entité de traitement nCDN(tk).

En définitive, l'invention se rapporte à un procédé de gestion du traitement d'un flux de données multicast par une entité de traitement, qui transforme dans notre exemple des paquets IP issus du flux multicast en segments HAS transmis dans flux unicast dans le réseau local. Le réseau local comprend un ensemble de dispositifs de traitement de données, et la localisation de l'entité de traitement (ou de transformation) évolue dans le temps ; à un instant donné, si l'entité de traitement est dans un terminal du réseau local, le flux multicast sera reçu par la passerelle GTW et transmis à destination du terminal sur lequel l'entité de traitement est installée.

A noter que la localisation est déterminée via un mécanisme dit d'auto découverte. L'entité de gestion ENT décrite ci-dessus mémorise la localisation courante afin d'orienter le flux vers le terminal sur lequel s'exécute l'entité de transformation.

Précisons enfin ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion du traitement d'un flux de données par une entité de traitement (nCDN(tk)) dans un réseau local comprenant un ensemble de dispositifs de traitement de données (STB,PC,MOB), **caractérisé en ce que** la localisation de l'entité de traitement (nCDN(tk)) évolue dans le temps dans l'ensemble.

2. Procédé de gestion selon la revendication 1, **caractérisé en ce que** le lieu du traitement est choisi en fonction des capacités de traitement des dispositifs de traitement.

3. Procédé de gestion selon la revendication 2, **caractérisé en ce que** le choix s'effectue en comparant des capacités de traitement de dispositifs du réseau local et en sélectionnant un dispositif à la base de la comparaison.

4. Procédé de gestion selon la revendication 2, **caractérisé en ce que** les capacités de traitement incluent une taille de mémoire volatile.

5. Procédé de gestion selon la revendication 4, **caractérisé en ce que** l'entité de traitement est apte à traiter un flux de données associé à un débit d'encodage, et **en ce que** le choix du lieu d'installation de l'entité dépend en outre dudit débit d'encodage du flux à traiter.

6. Procédé de gestion selon la revendication 1, **caractérisé en ce que** le réseau local comprend une passerelle domestique et **en ce que** la passerelle route le flux de données vers le lieu de traitement.

7. Procédé gestion selon la revendication 1, **caractérisé en ce que** le dispositif de traitement de données est apte à recevoir le flux de données depuis un réseau de communication.

8. Entité de gestion du traitement d'un flux de données dans un réseau local comprenant un ensemble de dispositifs de traitement de données (STB,PC,MOB), **caractérisé en ce qu'**elle comprend un processeur apte à requérir un déplacement du lieu du traitement dans ledit ensemble.

9. Dispositif de lecture (STB) comprenant une entité de gestion (ENT) telle que définie dans la revendication 8.

10. Programme d'ordinateur apte à être mis en oeuvre sur une entité de gestion (ENT) telle que définie dans la revendication 9, le programme comprenant des instructions de code qui, lorsqu'il est exécuté par un processeur, réalise les étapes du procédé définies dans la revendication 1.

11. Support de données sur lequel a été mémorisée au moins une série d'instructions de code de programme pour l'exécution d'un procédé selon la revendication 1.
